# EUROPÄISCHE PATENTANMELDUNG

(11) **EP 2 233 389 A1**
(43) Veröffentlichungstag der Anmeldung: **29.09.2010**
(21) Anmeldenummer: 10001241.8
(22) Anmeldetag: 06.02.2010
(51) Int. Cl.: B62M 3/08, A61H 1/02, A63B 22/08

(54) **Trainingsgerät mit fortlaufend zyklisch bewegbaren Betätigungselementen**

(30) Priorität: 19.03.2009 DE 202009003746 U
(71) Anmelder: Reck, Anton, 88422 Betzenweiler (DE)
(72) Erfinder: Reck, Anton, 88422 Betzenweiler (DE)
(74) Vertreter: Dobler, Markus

(57) **Zusammenfassung**

Es wird ein Trainingsgerät mit fortlaufend zyklisch bewegbaren Betätigungselementen für ein Beinpaar einer Person, die jeweils eine Fußschale (1) zur Aufnahme eines Fußes umfassen, vorgeschlagen, wobei die Fußschalen eine Auflagefläche (6) zur Auflage der Unterseite eines Fußes besitzt und Wandabschnitte aufweist, die die Auflagefläche zumindest an beiden Seiten und nach hinten teilweise umgeben, so dass ein eingestellter Fuß seitlich und nach hinten in Richtung Ferse einen Anschlag findet. Erfindungsgemäß ist wenigstens ein Wandabschnitt, der als Anschlag für einen eingestellten Fuß dient, in Bezug auf die Auflagefläche wegbewegbar.

## Beschreibung

Die Erfindung betrifft ein Trainingsgerät mit fortlaufend zyklisch bewegbaren Betätigungselementen nach dem Oberbegriff des Anspruchs 1.

### Stand der Technik:

Trainingsgeräte mit fortlaufend zyklisch bewegbaren Betätigungselementen für ein Beinpaar einer Person sind beispielsweise in Form eines Bewegungstrainers mit auf einer Kreisbahn sich bewegenden Pedalen in vielfältiger Form bereits bekannt geworden. Da solche Bewegungstrainer häufig für Personen zur Anwendung kommen, die in ihrer Beweglichkeit eingeschränkt sind und darüber hinaus über eine nur reduzierte Motorik verfügen, beispielsweise halbseitig gelähmte Personen, sind bei bekannten Ausführungsformen Fußschalen an den Betätigungselementen angeordnet, die um eine Auflagefläche einen Rand besitzen, der einem eingestellten Fuß seitlich und nach hinten einen Halt bietet. Ein Fuß bzw. ein Schuh kann an einem solchen Rand anschlagen und ist somit in der Position in dem vorgegebenen Bereich der Fußschale festgelegt. Nach vorne sind derartige Fußschalen in der Regel offen, so dass eine Person ihren Fuß von vorne auf eine Auflagefläche der Fußschale schieben kann. Ebenfalls möglich ist es, den Fuß seitlich oder von hinten über den Rand anzuheben und auf die Auflagefläche zu stellen.

### Aufgabe und Vorteile der Erfindung:

Der Erfindung liegt die Aufgabe zugrunde, ein Trainingsgerät der einleitend bezeichneten Art anwendungsfreundlicher zu gestalten.

Diese Aufgabe wird durch die Merkmale des Anspruchs 1 sowie 13 gelöst.

In den abhängigen Ansprüchen sind vorteilhafte und zweckmäßige Weiterbildungen der Erfindung angegeben.

Die Erfindung geht von einem Trainingsgerät mit fortlaufend zyklisch bewegbaren Betätigungselementen für ein Beinpaar für eine Person aus, die jeweils eine Fußschale zur Aufnahme eines Fußes umfassen. Darüber hinaus verfügt die Fußschale über eine Auflagefläche zur Auflage einer Fußunterseite bzw. Schuhsohle. Die Auflagefläche besitzt ferner Wandabschnitte, die die Auflagefläche an beiden Seiten links und rechts und nach hinten zumindest teilweise umgeben, so dass ein eingestellter Fuß seitlich und nach hinten in Richtung Ferse einen Anschlag findet, wenn sich der Fuß über die Auflagefläche seitlich oder nach hinten bewegen wollte. Der Kern der Erfindung liegt darin, dass wenigstens ein Wandabschnitt der als Anschlag für einen eingestellten Fuß dienen kann, in Bezug auf die Auflagefläche wegbewegbar ist.

Damit kann ein Fuß bequemer auf der Auflagefläche abgestellt werden. Denn es ist eine Bewegung auf einem Weg zur Auflagefläche möglich, der ohne wegbewegbaren Wandabschnitt durch diesen Wandabschnitt versperrt wäre.

In einer besonders bevorzugten Ausgestaltung der Erfindung kann der wegbewegbare Wandabschnitt über ein per Fuß zu betätigtes Betätigungselement betätigt werden. Vorzugsweise ist der wegbewegbare Wandabschnitt ohne aufgestellten Fuß in Bezug auf die Auflagefläche weggeklappt oder weggeschwenkt bzw. nach unten verfahren, wobei durch das Einstellen des Fußes und die Betätigung des Betätigungselements der Wandabschnitt über die Ebene der Auflagefläche hochschwenkt oder hochklappt bzw. sich über die Ebene der Auflagefläche verschiebt. Dadurch kann ein Fuß ohne Behinderung durch diesen Wandabschnitt einfach auf die Auflagefläche aufgestellt bzw. aufgeschoben werden und hat nach Betätigung des Betätigungselements dennoch den seitlichen Halt durch den nunmehr sich in Position befindlichen Wandabschnitt.

Das Betätigungselement kann im Bereich einer Ferse eines aufgestellten Fußes, so wie er normalerweise in der Fußschale positioniert ist, angeordnet sein. Jedoch sind auch andere Positionen denkbar, z. B. im Ballenbereich.

Vorzugsweise umfasst das Betätigungselement eine Betätigungsplatte, die beweglich an der Auflagefläche angeordnet ist. Durch eine Betätigungsplatte wird ein eingestellter Fuß bei der Betätigung nicht punktuell belastet, sondern eine Kraft wird durch die plattenförmige Ausgestaltung über einen größeren Bereich verteilt, so dass sie im besten Falle am Fuß kaum oder gar nicht spürbar ist. Das Betätigungselement ist vorzugsweise beweglich an der Auflagefläche angeordnet.

Im Weiteren ist es bevorzugt, wenn ein seitlich außen angeordneter Wandabschnitt, also der einer Betätigungselementaufnahme für die Fußschale gegenüberliegende Wandabschnitt wegbewegbar ausgebildet ist, z. B. durch Wegschwenken, Wegklappen oder Verschieben. Damit wird es möglich, den Fuß einfach seitlich von außen auf die Auflagefläche zu setzen, ohne dass eine Bedienperson einen seitlichen Rand an der Auflagefläche überwinden muss. Bei stark bewegungseingeschränkten Personen kann dies dazu beitragen, dass diese Person ohne Hilfe das Aufstellen bzw. Einstellen der Füße in die Fußschalen zustandebringt.

Eine Alternative oder zusätzliche Möglichkeit besteht darin, ein hinter der Ferse eines eingestellten Fußes angeordneten Wandabschnitt wegbewegbar auszugestalten. Durch die Maßnahme kann der Fuß durch eine Bewegung vom Körper weg, also nach vorne auf die Auflagefläche einfach geschoben werden, ohne wiederum einen erhöhten Rand überwinden zu müssen.

Zum Wegbewegen eines hinteren oder seitlichen Wandabschnitts kann eine Schwenkachse vorgesehen werden, die in Bezug auf die Längsausrichtung einer Fußschale in Längsrichtung oder quer dazu verläuft. Vorzugsweise wird ein seitlicher Rand, also seitlich, z. B. links bzw. rechts neben dem linken bzw. rechten Fuß, ein wegbewegbarer Wandabschnitt eine Schwenkachse besitzen, die in Längsrichtung verläuft, wogegen für einen Wandabschnitt im hinteren Bereich der Fußschale die Schwenkachse bevorzugt quer dazu verläuft.

In einer überdies bevorzugten Ausgestaltung ist es vorteilhaft, wenn ein wegbewegbarer Wandabschnitt für einen seitlichen Anschlag eines eingestellten Fußes nach außen an einem schwenkbaren Anpresselement für einen Fußrücken angebracht ist. Häufig sind derartige Anpresselemente, z. B. eine Anpressrolle erforderlich, damit eine trainierende Person während einer zyklischen Bewegung, insbesondere Tretbewegung sicher mit dem Fuß auf der Auflagefläche bleibt und diesen nicht unkontrolliert abhebt. Solche Anpresselemente werden normalerweise auf den Fußrücken durch eine Schwenkbewegung, gegebenenfalls auch lineare Bewegung positioniert. Durch diese Bewegung wird ein am Anpresselement angebrachter Wandabschnitt vorzugsweise so mitbewegt, dass eine seitliche Fixierung des Fußes ebenfalls gewährleistet ist. Wird nach Ende des Trainings das Anpresselement abgenommen, kann der Fuß ohne jegliche Behinderung durch einen Rand dann seitlich von der Auflagefläche der Fußschale genommen werden.

In einer weiteren bevorzugten Ausführungsform der Erfindung ist es günstig, eine Fernbedieneinrichtung zur Betätigung eines Wegbewegvorgangs eines Wandabschnitts und/oder eines Anpresselements vorzusehen. Dies kann beispielsweise durch einen Kabelzug erfolgen, der von Hand in bequemer Sitzposition an einem Bewegungstrainer betätigbar ist. Denkbar ist auch ein fernbedienbarer elektrischer Aktor, der einen wegbewegbaren Wandabschnitt und/oder das Anpresselement, z. B. eine Anpressrolle in Position bringt, wenn z. B. eine Schalterbetätigung oder eine Detektionsmeldung durch einen Sensor erfolgt.

Beim Wegbewegen des Wandabschnitts wird vorzugsweise der Wandabschnitt unterhalb der Auflagefläche positioniert, z. B. abgesenkt oder abgeschwenkt. Damit kann sichergestellt werden, dass kein hochstehender Rand ein Aufstellen eines Fußes auf der Auflagefläche der Fußschale behindert. Zum Wegbewegen des Wandabschnitts kann z. B. ein Klappmechanismus oder ein Parallelogrammmechanismus zur Anwendung kommen. Ein Klappmechanismus lässt sich durch einfache konstruktive Maßnahmen, wie z. B. einem zweiseitigen Hebel mit einer Hebelseite, an der der wegbewegbare Rand und einer zweiten Hebelseite, an der ein Betätigungselement angeordnet ist, realisieren, wobei sich der Hebel um eine Achse verschwenken lässt. Ein Parallelogrammmechanismus ist dagegen etwas aufwändiger, wobei jedoch dadurch der wegbewegbare Wandabschnitt sich in einer Ebene verfahren lässt, wodurch eine senkrechte Positionierung des Wandabschnitts zur Auflagefläche der Fußschale immer gegeben ist.

Ein weiterer wesentlicher Aspekt der Erfindung liegt darin, dass die Fußschale eine Fußheizung umfasst. Insbesondere wenn im Bett liegende Kranke oder gebrechliche Menschen am Trainingsgerät trainieren und mit nackten Füßen die Fußschalen betätigen, kann eine Fußheizung das Wohlbefinden der trainierenden Person erheblich fördern. Eine solche Fußheizung ist vorzugsweise temperaturgesteuert, so dass keine unangenehme Überwärmung des Fußes stattfindet.

### Beschreibung der Ausführungsbeispiele:

Mehrere Ausführungsbeispiele der Erfindung sind in den Zeichnungen dargestellt und werden nachfolgend unter Angabe weiterer Vorteile und Einzelheiten näher erläutert.

Es zeigen:
- Fig. 1a bis 1f: eine erste Ausführungsform einer Fußschale in einer Draufsicht (Fig. 1b), einer Ansicht von unten (Fig. 1a), drei Seitenansichten (Fig. 1c, Fig. 1d, Fig. 1e) sowie einer perspektivischen Ansicht (Fig. 1f) in einem Zustand, in welchem ein Wandabschnitt abgesenkt ist,
- Fig. 2a bis 2f: die zu Fig. 1a bis 1f entsprechenden Darstellungen mit nach oben verlagertem Wandabschnitt.
- Fig. 3a bis 12f: entsprechende Darstellungen für weitere fünf Ausführungsformen im weggefahrenen Zustand eines Wandabschnitts und mit in Trainingsposition sich befindender Lage eines Wandabschnitts.

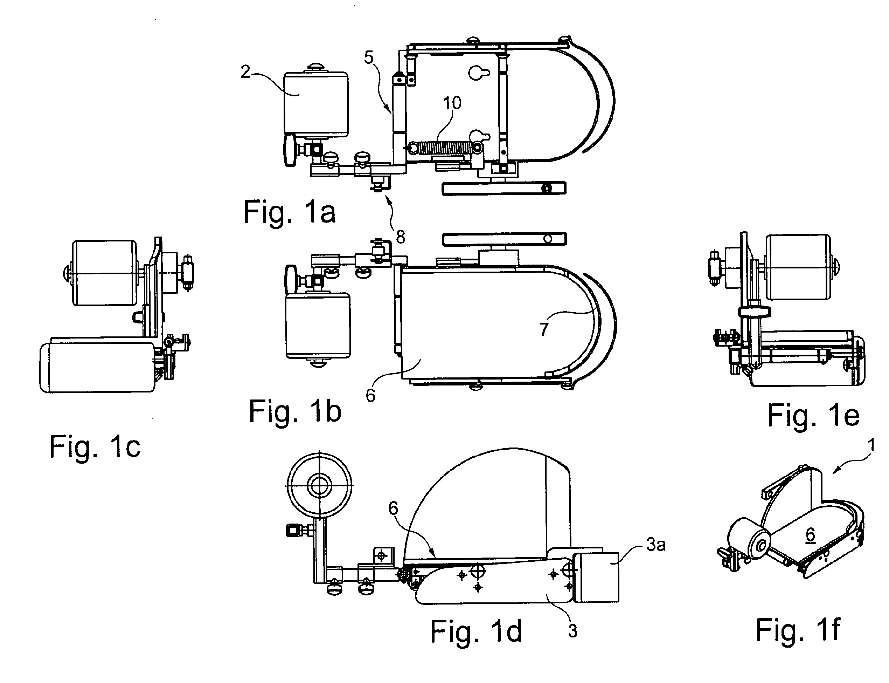

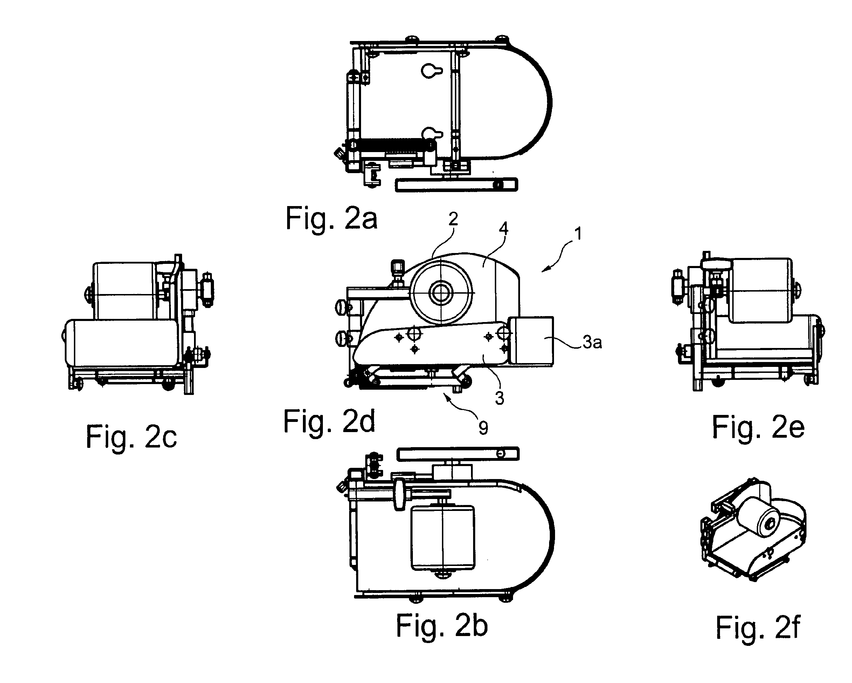

Die Fig. 1a bis 2f zeigen eine Ausführungsform, bei welcher durch eine Bewegung einer Anpressrolle 2 für die Fixierung eines Fußrückens eines Fußes gleichzeitig ein außenseitiger Rand 3 mitbewegt wird. In den Figuren abgebildet ist die Fußschale 1 für einen linken Fuß. Im nach oben gefahrenen Zustand (Fig. 2a bis 2f) bildet damit der seitliche Rand 3 einen Anschlag zur Außenseite sowie eine Anlage im Fersenbereich eines eingestellten Fußes durch einen gebogenen Wandbereich 3a. In Bezug auf die Innenseite eines eingestellten Fußes ist ein Wandabschnitt 4 angeordnet, der vergleichsweise weit nach oben verläuft und an welchem ein Montagemittel für die Anbringung an einem Betätigungselement, z. B. einer Tretkurbel, vorgesehen ist. Bei Trainingsbeginn ist die Anpressrolle 2 über eine Schwenkachse 5 nach vorne zur offenen Seite der Fußschale gekippt. In diesem Zustand ist der seitliche Rand 3 mit gebogenen Wandbereich 3a unterhalb einer Auflagefläche 6 der Fußschale 1 positioniert. Damit kann ein Fuß ohne Behinderung durch den seitlichen Rand 3 von außen seitlich oder auch von hinten auf die Auflagefläche 6 gestellt bzw. geschoben werden. Im Ausführungsbeispiel muss lediglich ein minimaler Rand 7 von einer trainierenden Person überwunden werden, wenn diese den Fuß von hinten auf die Fußschale stellt bzw. schiebt. Dadurch wird das Auflegen des Fußes auf die Auflagefläche 6 zu einem bequemen Vorgang für eine trainierende Person, der auch von einer stark bewegungseingeschränkten Person bewältigt werden kann.

Der Rand 7 am hinteren Bereich der Fußschale 1 hat die Aufgabe, einen eingestellten Fuß vor dem Hochfahren des seitlichen Randes 3 zunächst vorzupositionieren, so dass beim Hochfahren ein falsch positionierter Fuß die Bewegung des seitlichen Randes nach oben nicht behindert bzw. ein barfuß eingestellter Fuß nicht in etwa vom hochfahrenden seitlichen Rand angeschrammt und gar verletzt wird.

Steht der Fuß richtig positioniert auf der Auflagefläche 6, kann die Anpressrolle 2 umgelegt werden, wodurch gleichzeitig der seitliche Rand 3 mit gebogenem Wandbereich 3a nach oben verfahren wird. Dieser Zustand ist in den Figuren 2a bis 2f dargestellt. Durch den hochgefahrenen seitlichen Rand 3 ist der Fuß einer trainierenden Person so aufgenommen, dass dieser beim Trainieren nicht seitlich von der Auflagefläche 6 rutschen kann, sondern einen Anschlag bildet. Durch die Anpressrolle 2a wird der Fuß im hinteren Bereich der Fußschale zusätzlich fixiert, so dass dieser nicht nach oben oder nach vorne beim Trainieren ausweichen kann. Die Bewegung des seitlichen Randes 3 ist mit dem Aufnahmegestänge 8 der Anpressrolle 2 über einen Parallelmechanismus 9 gekoppelt, so dass bei einer Bewegung der Anpressrolle 2 nach vorne der seitliche Rand 3 abgesenkt und bei einer Bewegung der Anpressrolle 2 nach hinten in Bezug auf die Fußschale der seitliche Rand 3 angehoben wird.

Um das Gewicht der Anpressrolle 2 auszugleichen, ist eine Zugfeder 10 vorgesehen. Damit lässt sich die Anpressrolle 2 leicht in die jeweilige gewünschte Position bringen und bringt trotzdem die nötige Haltekraft in dem auf den Fußrücken geklappten Zustand.

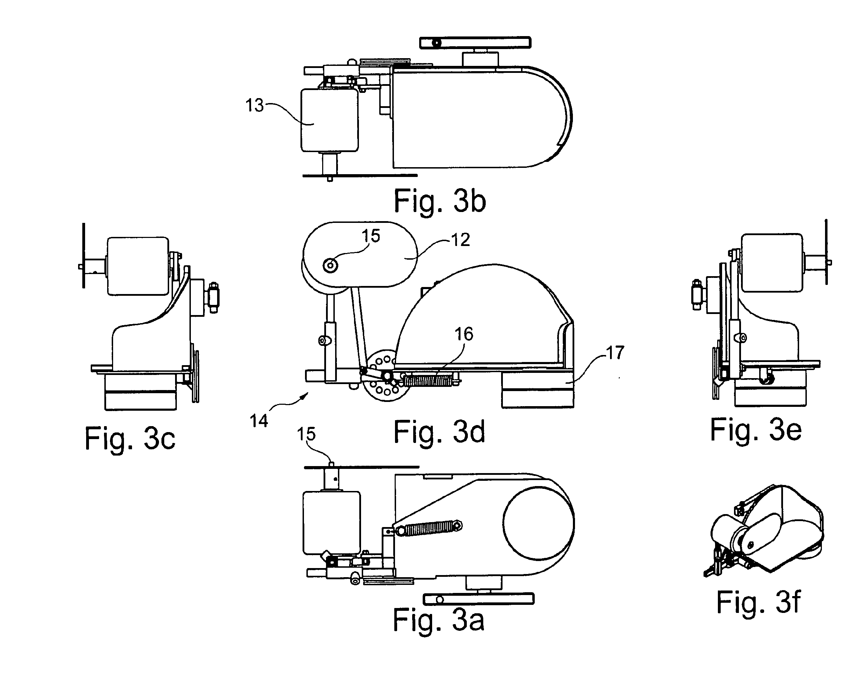

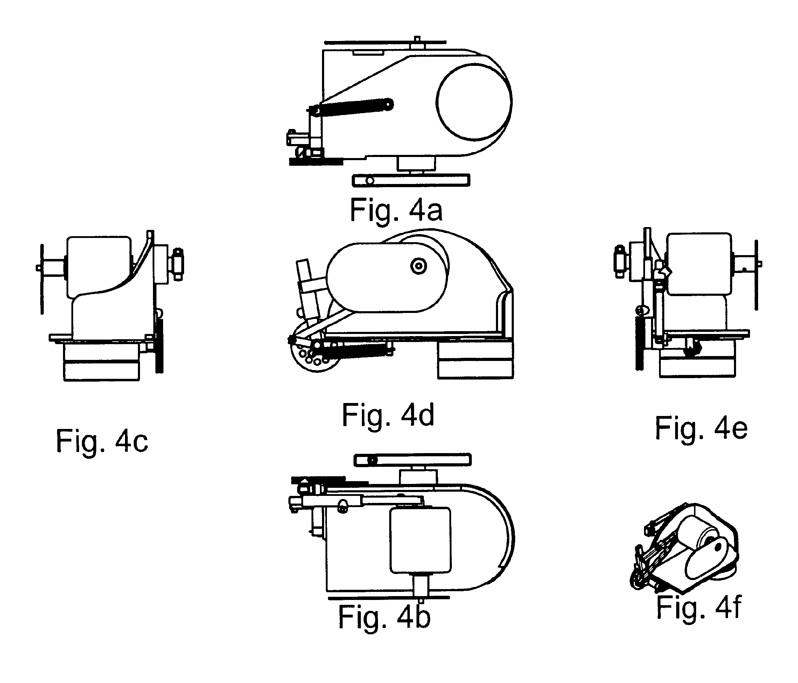

In den Figuren 3a bis 4f ist eine weitere Ausführungsform einer Fußschale 11 dargestellt, bei welcher ein außen seitlicher Wandabschnitt 12 an einer Anpressrolle 13 derart montiert ist, dass sich der Wandabschnitt bei auf einem Fußrücken abgelegter Anpressrolle 13 seitlich neben dem Fuß positioniert. Dies erfolgt durch eine Gelenkhebelanordnung 14, die einerseits die Anpressrolle 13 trägt und andererseits den Wandabschnitt 12, jedoch so, dass dieser drehbar um eine Achse 15 im auf einen Fußrücken geklappten Zustand der Anpressrolle 13 um 180° verschwenkt, so dass der zur Schwenkachse 15 längere Abschnitt in Richtung Auflagefläche 6 zeigt. Hierdurch findet eine seitliche Einfassung des Fußes statt, so dass dieser seitlich, d. h. der linke Fuß nicht seitlich nach links außen aus der Fußschale beim Trainieren herausfallen oder sich herausbewegen kann. In der Ausführungsform gemäß der Figuren 3a bis 4f ist die in der ersten Ausführungsform beschriebene Wand 4 etwas höher in den Fersenbereich gezogen, womit ein Aufschieben von der Rückseite auf die Fußschale nicht möglich ist. Lediglich das seitliche Aufschieben bei weggeklappter Anpressrolle 13 mit Wandabschnitt 12 kann von einem Trainierenden in bequemer Weise vorgenommen werden.

Um einen ausgeglichenen Bewegungsablauf beim Verschwenken der Anpressrolle 13 mit Wandabschnitt 12 zu erhalten, kommt auch bei dieser Ausführungsform eine Zugfeder 16 zur Anwendung, die eine Gegenkraft bereithält. Damit insgesamt die Fußschale 11 in einem ausbalancierten Zustand an einem Betätigungselement drehbar gelagert ist, ist vorzugsweise ein Gegengewicht 17 zur Anpressrolle 13 mit Wandabschnitt 12 und Gelenkhebelanordnung 14 vorgesehen.

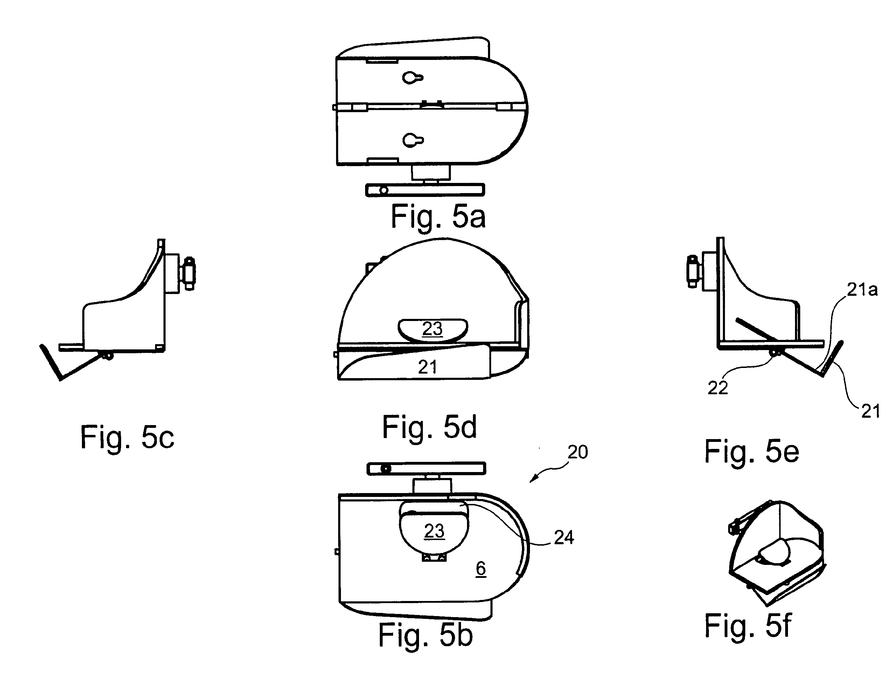

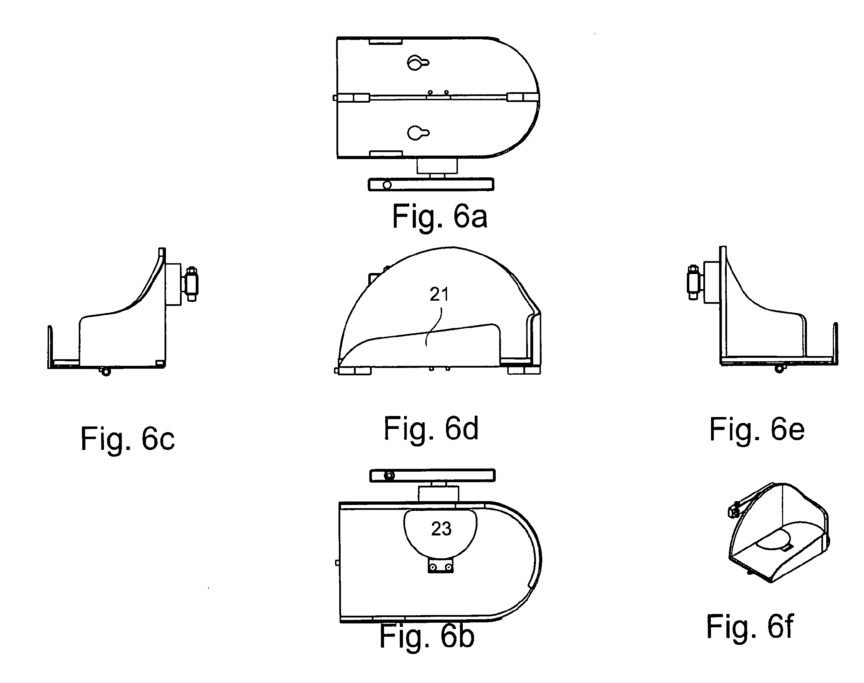

Die Figuren 5a bis 6f zeigen eine dritte Ausführungsform einer Fußschale 20, bei welcher ein seitlich linker Rand 21 im nicht belasteten Zustand durch einen Fuß nach unten wegkippt. Hierzu ist der Rand 21 über einen Hebelabschnitt 21a an einer Drehachse 22 gelagert, die zur Längsachse der Fußschale 20 ausgerichtet ist. Auf der dem Hebelabschnitt 21a gegenüberliegenden Seite der Drehachse 22 ist eine Betätigungsplatte 23 vorgesehen, die in eine dazu passende Ausnehmung 24 in der Auflagefläche 6 der Fußschale 20 einschwenkt, wenn der Rand 21, wie in den Figuren 6a bis 6f dargestellt, sich in der nach oben geschwenkten Position befindet. Diese Position wird dann erreicht, wenn ein Fuß seitlich, d. h. von links außen auf die Auflagefläche 6 der Fußschale 20 geschoben wird und dadurch die Betätigungsplatte 3 nach unten drückt, womit sich der Rand 21 nach oben bewegt.

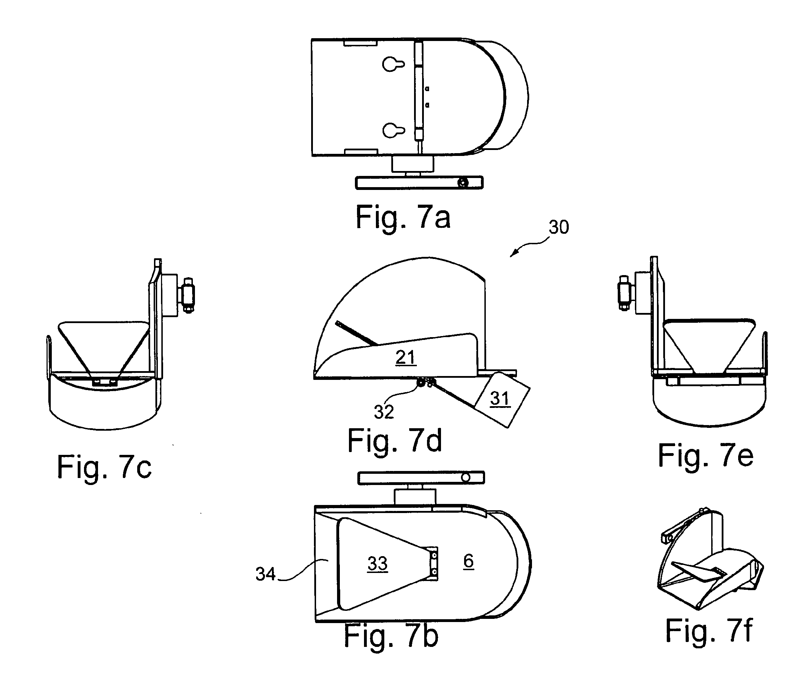

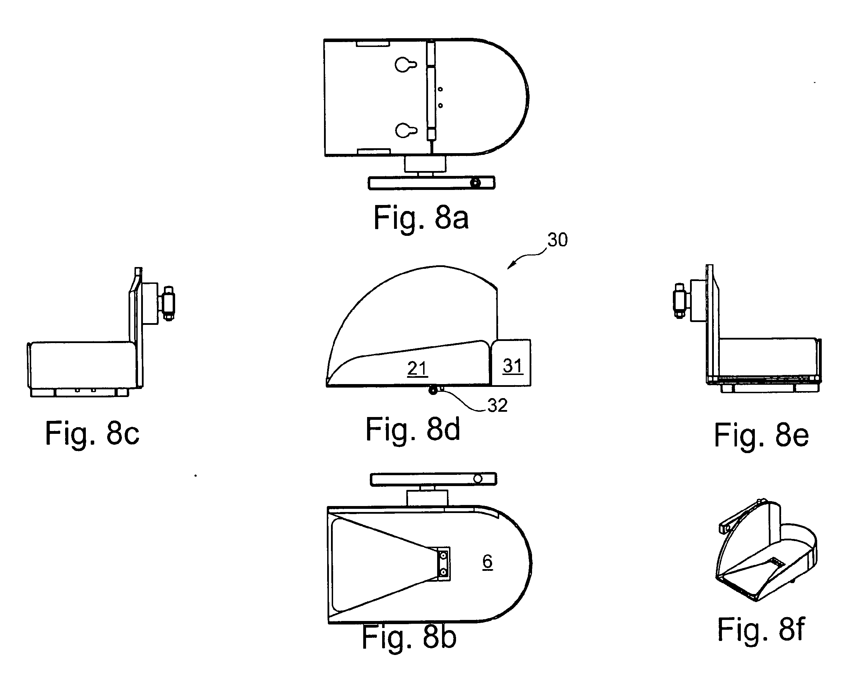

Eine vierte Ausführungsform einer Fußschale 30 zeigen die Figuren 7a bis 8f. In dieser Ausführungsform wird, nicht wie in der vorhergehenden Ausführungsform, ein seitlicher Rand 21 weggeschwenkt, sondern ein hinterer Fersenrandbereich 31. Im nicht betätigten Zustand "hängt" der Randbereich 31 nach hinten unten (siehe Figur 7d), so dass eine trainierende Person ihren linken Fuß von hinten auf die Fußschale, d. h. auf den Auflagebereich 6 aufschieben bzw. aufstellen kann, ohne dass der Fersenrandbereich 31 überwunden werden muss.

Der Fersenrandbereich 31 ist ähnlich wie in der vorhergehenden Ausführungsform an einem zweiseitigen Hebel mit einer Drehachse 32 montiert, wobei die andere Seite des Hebels eine Betätigungsplatte 33 bildet, die in eine dazu passende Ausnehmung 34 in der Auflagefläche 6 einschwenkt, wenn ein linker Fuß von hinten in Richtung Betätigungsplatte aufgestellt oder aufgeschoben wird. Solange der Fuß auf der Auflagefläche 6 steht, ist der Fersenrandbereich 31 nach oben geschwenkt und verhindert damit, dass der Fuß einer trainierenden Person nach hinten aus der Fußschale 30 herausrutschen kann.

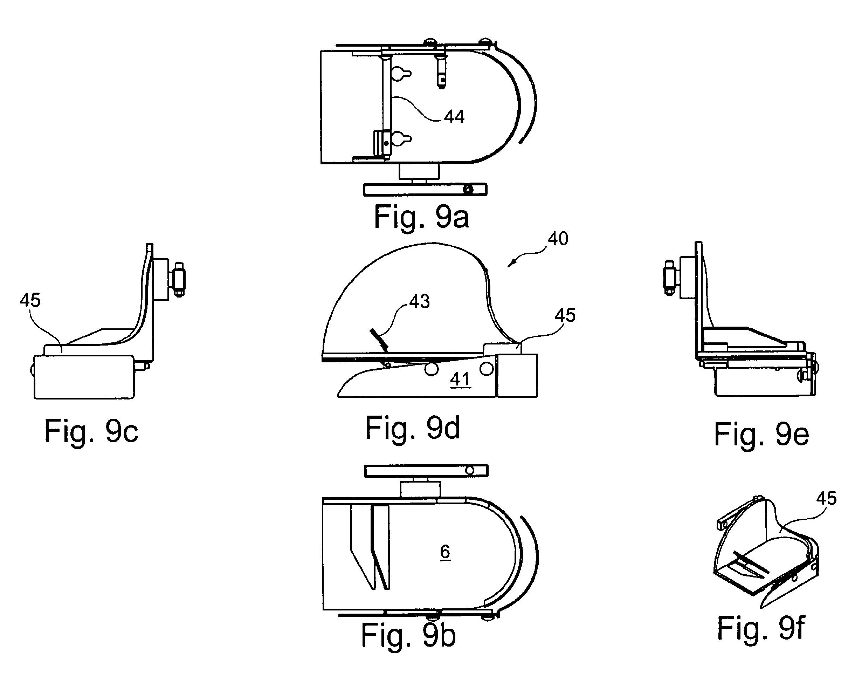

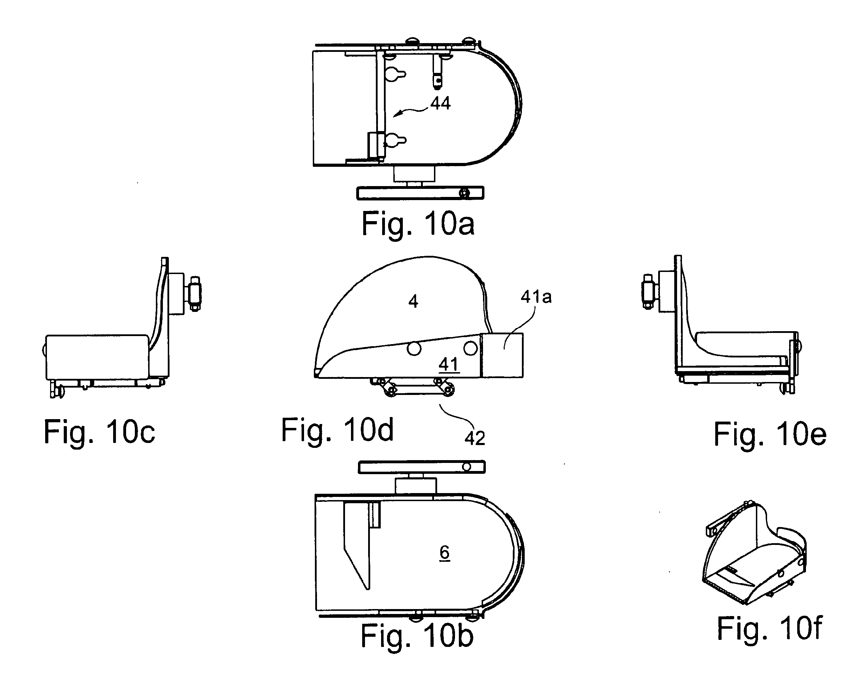

Eine fünfte Ausführungsform einer Fußschale 40 wird in den Figuren 9a bis 10f abgebildet. Ein absenkbarer seitlicher Rand 41 ist ähnlich ausgebildet wie in der ersten hier beschriebenen Ausführungsform mit einem gebogenen Wandbereich 41a im Fersenbereich eines aufgestellten Fußes. Jedenfalls vergleichbar ist ein Parallelogramm-Mechanismus 42, über welchen der seitliche Rand 41 angehoben und abgesenkt werden kann.

Der Parallelogramm-Mechanismus wird jedoch nicht, wie in der ersten Ausführungsform, durch das Gestänge 8 einer Anpressrolle bedient, sondern durch ein Betätigungselement 43, das über eine Achse 44 mit dem Parallelogramm-Mechanismus 42 verbunden ist. Steht kein Fuß in der Fußschale 40, ist das Betätigungselement 43 nach oben geschwenkt, womit der seitliche Rand 41 unter die Auflagefläche 6 der Fußschale abgesenkt ist (siehe z. B. Figur 9d). Durch Aufstellen eines linken Fußes wird das Betätigungselement 43 nach unten gedrückt, wodurch der seitliche Rand 41 nach oben verschoben wird und damit eine Anschlagbarriere für den eingestellten Fuß für eine ungewollte seitliche Bewegung oder Bewegung nach hinten bildet.

Der seitliche Wandabschnitt 4 ist in dieser Ausführungsform ebenfalls in den hinteren Bereich der Fußschale jedoch dann stark abgesenkt gezogen, so dass dieser Abschnitt 45 eine Positionierhilfe bildet, um bei abgesenktem seitlichen Rand den Fuß bereits in die richtige Position zu bringen.

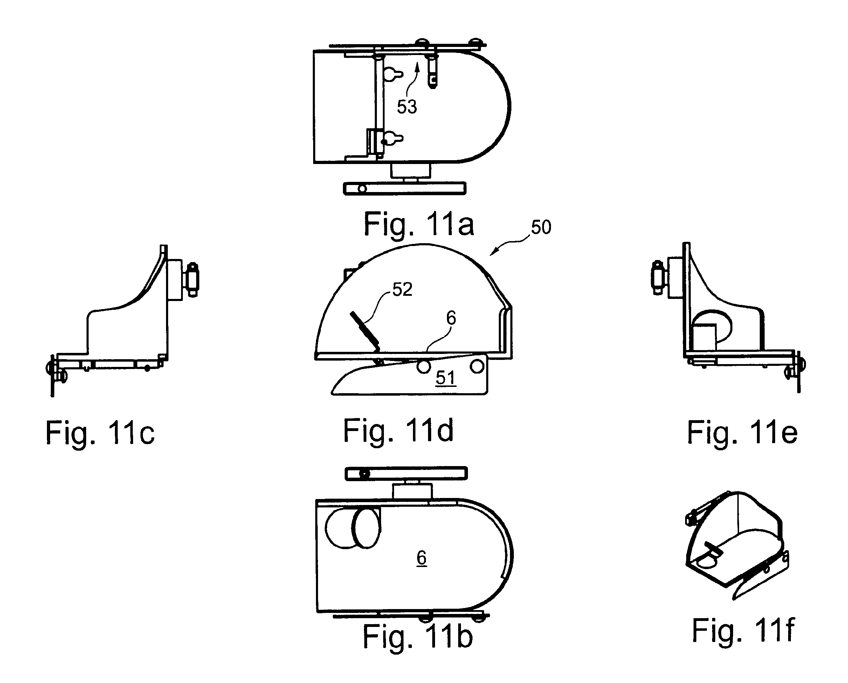

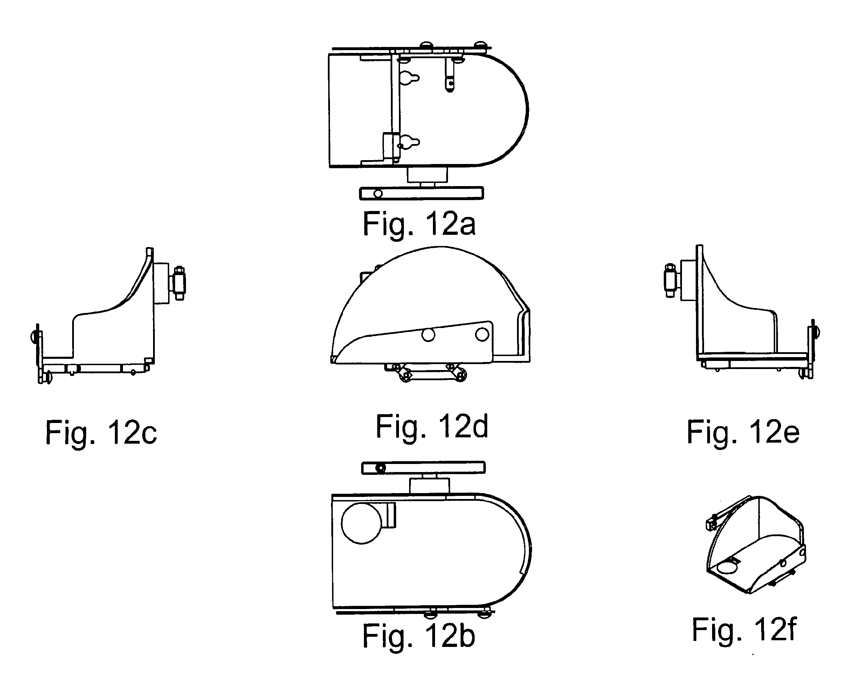

Die Figuren 11a bis 12f zeigen eine sechste Ausführungsform einer Fußschale, die ganz ähnlich aufgebaut ist, wie die fünfte Ausführungsform, jedoch mit dem Unterschied, dass lediglich ein seitlicher Rand 51 in Bezug auf die Auflagefläche 6 der Fußschale 50 absenkbar und anhebbar über ein Betätigungselement 52 und ein Hebelgestänge 53 ausgebildet ist.

### Bezugszeichenliste:

- 1: Fußschale
- 2: Anpressrolle
- 3: seitlicher Rand
- 3a: gebogener Wandbereich
- 4: Wandabschnitt
- 5: Schwenkachse
- 6: Auflagefläche
- 7: Rand
- 8: Gestänge
- 9: Parallelogramm-Mechanismus
- 10: Zugfeder
- 11: Fußschale
- 12: Wandabschnitt
- 13: Anpressrolle
- 14: Gelenkhebelanordnung
- 15: Achse
- 16: Zugfeder
- 17: Gegengewicht
- 20: Fußschale
- 21: Rand
- 21a: Hebelabschnitt
- 22: Drehachse
- 23: Betätigungsplatte
- 24: Ausnehmung
- 30: Fußschale
- 31: Fersenrandbereich
- 32: Drehachse
- 33: Betätigungsplatte
- 34: Ausnehmung
- 40: Fußschale
- 41: seitlicher Rand
- 41a: gebogener Wandbereich
- 42: Parallelogramm-Mechanismus
- 43: Betätigungselement
- 44: Achse
- 45: Abschnitt
- 50: Fußschale
- 51: seitlicher Rand
- 52: Betätigungselement
- 53: Hebelgestänge

## Patentansprüche

1. Trainingsgerät mit fortlaufend zyklisch bewegbaren Betätigungselementen für ein Beinpaar einer Person, die jeweils eine Fußschale (1, 11, 20, 30, 40, 50) zur Aufnahme eines Fußes umfassen, die eine Auflagefläche (6) zur Auflage einer Fußunterseite besitzt und die Wandabschnitte aufweist, die die Auflagefläche an beiden Seiten links und rechts und nach hinten zumindest teilweise umgeben, so dass ein eingestellter Fuß seitlich und nach hinten Richtung Ferse einen Anschlag findet, **dadurch gekennzeichnet, dass** wenigstens ein Wandabschnitt (3, 3a, 12, 21, 31, 41, 51), der als Anschlag für einen eingestellten Fuß dient, in Bezug auf die Auflagefläche (6) wegbewegbar ist.

2. Trainingsgerät nach Anspruch 1, **dadurch gekennzeichnet, dass** ein wegbewegbarer Wandabschnitt (12, 21, 31, 41, 51) über ein per Fuß zu betätigendes Betätigungselement bewegbar ist.

3. Trainingsgerät nach einem der vorhergehenden Ansprüche, **dadurch gekennzeichnet, dass** das Betätigungselement eine Betätigungsplatte (23, 33, 43, 52) umfasst, die beweglich an der Auflagefläche angeordnet ist.

4. Trainingsgerät nach einem der vorhergehenden Ansprüche, **dadurch gekennzeichnet, dass** ein seitlich außen angeordneter Wandabschnitt (3, 12, 21, 41, 51) wegbewegbar ausgebildet ist.

5. Trainingsgerät nach einem der vorhergehenden Ansprüche, **dadurch gekennzeichnet, dass** ein hinter der Ferse eines eingestellten Fußes angeordneter Wandabschnitt (3a, 41a, 21) wegbewegbar ausgestaltet ist.

6. Trainingsgerät nach einem der vorhergehenden Ansprüche, **dadurch gekennzeichnet, dass** eine Schwenkachse (22) für den wegbewegbaren Wandabschnitt vorgesehen ist, die in Bezug auf die Fußschalenausrichtung in Längsrichtung verläuft.

7. Trainingsgerät nach einem der vorhergehenden Ansprüche, **dadurch gekennzeichnet, dass** eine Schwenkachse (32) für den wegbewegbaren Wandabschnitt vorgesehen ist, die in Bezug auf die Fußschalenausrichtung in Querrichtung verläuft.

8. Trainingsgerät nach einem der vorhergehenden Ansprüche, **dadurch gekennzeichnet, dass** ein Wandabschnitt (12) für einen seitlichen Anschlag eines eingestellten Fußes an einem Anpresselement (13) für einen Fußrücken angebracht ist.

9. Trainingsgerät nach einem der vorhergehenden Ansprüche, **dadurch gekennzeichnet, dass** eine Fernbedieneinrichtung zur beispielsweise mechanischen und/oder elektronischen Betätigung eines Wegbewegvorgangs eines bewegbaren Wandabschnitts und/oder eines Anpresselements vorgesehen ist.

10. Trainingsgerät nach einem der vorhergehenden Ansprüche, **dadurch gekennzeichnet, dass** ein wegbewegbarer Wandabschnitt (3, 3a, 12, 21, 31, 41, 51) unter die Auflagefläche absenkbar ist.

11. Trainingsgerät nach einem der vorhergehenden Ansprüche, **dadurch gekennzeichnet, dass** ein wegbewegbarer Wandabschnitt (21, 31) mittels eines Klappmechanismus schwenkbar ist.

12. Trainingsgerät nach einem der vorhergehenden Ansprüche, **dadurch gekennzeichnet, dass** ein wegbewegbarer Wandabschnitt (3, 12, 41, 51) durch eine Parallelogramm-Mechanik bewegbar ist.

13. Trainingsgerät nach dem Oberbegriff des Anspruchs 1, insbesondere nach einem der vorhergehenden Ansprüche, **dadurch gekennzeichnet, dass** in der Fußschale eine Fußheizung vorgesehen ist.
